# EUROPEAN PATENT APPLICATION

(11) **EP 4 819 455 A1**
(43) Date of publication of application: **07.10.2026**
(21) Application number: 25870707.4
(22) Date of filing: 18.08.2025
(51) Int. Cl.: H02K 15/02

(54) **STATOR ASSEMBLY PRODUCTION LINE AND STATOR ASSEMBLY METHOD**

(30) Priority: 13.11.2024 CN 202411618763
(71) Applicant: Suzhou Thande Precision Engineering Co., Ltd., Suzhou 215101 (CN)
(72) Inventor: LIU, Jing, Suzhou, Jiangsu 215101 (CN); ZOU, Shiwang, Suzhou, Jiangsu 215101 (CN)
(74) Representative: Chung, Hoi Kan
(86) International application number: PCT/CN2025/115364
(87) International publication number: WO 2026/066803

(57) **Abstract**

The present invention relates to a stator assembly production line and a stator assembly method. The stator assembly production line comprises: a frame; a loading structure, wherein the loading structure comprises a loading turntable rotatably arranged at the top of the frame, support assemblies annularly arranged at the top of the loading turntable, an agent impregnation disc fixed at the top of the frame and located on one side of the loading turntable, and a loading assembly arranged at the tops of the support assemblies and the top of the agent impregnation disc; and an adhesive applying structure, wherein the adhesive applying structure comprises an adhesive applying turntable rotatably arranged at the top of the frame, adhesive applying discs annularly arranged at the top of the adhesive applying turntable, and an adhesive applying assembly arranged on an outer side of the adhesive applying turntable. The loading assembly sucks stator discs from the agent impregnation disc and places same on the adhesive applying discs, and the adhesive applying assembly applies an adhesive to the upper surfaces of the stator discs. The stator assembly production line of the present invention has stronger versatility, improves the transfer, bonding and press-mounting efficiency of the stator discs, and prevents insufficient press-mounting or excessive press-mounting, thereby increasing the pass rate of finished stators.

## Description

### Technical Field

The present invention belongs to the technical field of stator assembly, and specifically relates to a stator assembly production line and a stator assembly method.

### Background Technology

A stator, as the stationary part of an electric motor, comprises a stator core, stator windings, and a frame. The main function of the stator is to generate a rotating magnetic field, while the main function of a rotor is to be cut by magnetic lines of force within this rotating magnetic field, thereby generating (outputting) an electric current. During the processing and production of a stator, a stamping process is typically employed to punch out single stator discs from silicon steel plates. These stator discs are then laminated and bonded together by welding or adhesive bonding, thereby forming the stator. In existing stator assembly processes, the transfer, handling, and press-mounting of stator discs still require manual intervention. This not only affects the assembly efficiency of the stator, but also affects the assembly accuracy of the stator discs.

### Summary of the Invention

### Technical Problem

The present invention provides a stator assembly production line and a stator assembly method, solving the deficiencies in the prior art where manual intervention in the stator assembly process leads to reduced stator assembly efficiency and finished product qualification rate.

### Solution to Problem

To achieve the above objective, the technical solution adopted by the present invention is: A stator assembly production line, comprising: a frame; a loading structure, the loading structure comprising a loading turntable rotatably arranged at the top of the frame, support assemblies annularly arranged at the top of the loading turntable, an agent impregnation disc fixed at the top of the frame and located on one side of the loading turntable, and a loading assembly arranged at the tops of the support assemblies and the top of the agent impregnation disc, wherein stator discs are stacked and placed on the support assemblies, and the loading assembly sucks a single uppermost stator disc from the support assemblies and places it inside the agent impregnation disc; an adhesive applying structure, wherein the adhesive applying structure comprises an adhesive applying turntable rotatably arranged at the top of the frame, adhesive applying discs annularly arranged at the top of the adhesive applying turntable, and an adhesive applying assembly arranged on an outer side of the adhesive applying turntable, wherein the loading assembly sucks the stator discs from the agent impregnation disc and places same on the adhesive applying discs, and the adhesive applying assembly applies an adhesive to the upper surfaces of the stator discs; an adjusting structure, the adjusting structure comprising an angle adjusting assembly and a flipping assembly fixed at the top of the frame, a transport assembly mounted above the adhesive applying discs and the angle adjusting assembly, and a transferring assembly arranged below the flipping assembly, wherein the transport assembly sucks the stator discs from the adhesive applying discs and places same on the angle adjusting assembly or sucks the stator discs from the angle adjusting assembly and places same on the flipping assembly, adjustment angles of the angle adjusting assembly are distributed in an arithmetic progression; the flipping assembly flips the stator disc to make its adhesive-applied surface face downward and its agent-impregnated surface face upward, and places it on the transferring assembly; a press-mounting structure, the press-mounting structure comprising a bearing assembly and a press-mounting assembly; the bearing assembly comprising a bearing frame, an inner gauge fixed at the top of the bearing frame, a tray liftably sleeved on the inner gauge, and second insert rods annularly arranged at the top of the bearing frame and penetrating through the tray, wherein the transport assembly sucks the stator discs from the transferring assembly and places same on the tray, and the inner gauge is configured to limit an inner sidewall of the stator disc; the press-mounting assembly comprising a press-mounting frame mounted above the bearing frame, a pressing frame liftably arranged at a bottom portion of the press-mounting frame, a pressing plate fixed at a bottom portion of the pressing frame, an outer gauge fixed at a bottom portion of the pressing plate, a pressing block elastically arranged at the bottom portion of the pressing plate and abutting against an inner sidewall of the outer gauge, and insertion slots annularly arranged at a bottom portion of the pressing block; wherein when the pressing frame descends, the pressing block presses against an upper surface of the stator disc on the tray, the insertion slots are configured to limit the second insert rods, and the outer gauge is configured to limit an outer sidewall of the stator disc.

Preferably, the support assemblies comprise an outer fixed disc fixed at the top of the loading turntable, first insert rods annularly arranged at the top of the outer fixed disc, first guiding portions obliquely arranged on tops of the first insert rods, and an inner lifting disc liftably sleeved on the first insert rods, wherein the stator discs are inserted on the first insert rods.

Preferably, the loading assembly comprises a loading frame, a loading plate movably arranged on one side of the loading frame, a first lifting plate liftably arranged on one side of the loading plate, an air plate fixed at a bottom portion of the first lifting plate, a leveling plate fixed at a bottom portion of the air plate, suction nozzles annularly arranged at the top of the air plate, and air holes and avoidance holes penetrating through the leveling plate, wherein the suction nozzles are installed through the air holes and are configured to suck a single uppermost stator disc from the inner lifting disc.

Preferably, the loading structure further comprises a second lifting plate liftably arranged at a bottom portion of the loading frame, a separation disc fixed at a bottom portion of the second lifting plate, separation air blocks annularly arranged on an inner sidewall of the separation disc, and air grooves formed on inner sides of the separation air blocks, wherein the separation air blocks are configured to separate a first layer of stator disc and a second layer of stator disc at the top of the inner lifting disc.

Preferably, the angle adjusting assembly comprises an adjustment frame fixed at the top of the frame, a receiving disc rotatably mounted at the top of the adjustment frame, first positioning blocks annularly arranged at the top of the receiving disc, and first positioning portions obliquely formed on tops of the first positioning blocks, wherein the transport assembly sucks the stator discs from the adhesive applying discs and places same on the receiving disc.

Preferably, the flipping assembly comprises a flipping frame fixed at the top of the frame, a third lifting plate liftably arranged on one side of the flipping frame, a flipping plate rotatably mounted on a side of the third lifting plate away from the flipping frame, an adjustment plate adjustably arranged on one side of the flipping plate, and suction mechanisms fixed on both sides of the adjustment plate, wherein the transport assembly sucks the stator discs from the receiving disc and places same on the suction mechanisms, and the flipping assembly flips the stator disc to make its adhesive-applied surface face downward and its agent-impregnated surface face upward.

Preferably, the transferring assembly comprises a transferring frame fixed at the top of the frame, a transferring plate rotatably mounted at the top of the transferring frame, transferring discs fixed at the top of the transferring plate at intervals, and placement slots formed on tops of the transferring discs, wherein an inner diameter of the placement slots is arranged to be greater than an inner diameter of the stator disc, an outer diameter of the placement slots is arranged to be less than an outer diameter of the stator disc, and the flipping assembly places the flipped stator disc on the transferring discs.

Preferably, the bearing assembly further comprises a main sliding plate slidably connected to the bearing frame, a first wedge surface obliquely formed at the top of the main sliding plate, an auxiliary sliding plate arranged at the top of the main sliding plate, a second wedge surface obliquely formed at a bottom portion of the auxiliary sliding plate and cooperating with the first wedge surface, a top disc fixed at the top of the auxiliary sliding plate, and top columns annularly arranged at the top of the top disc and fixed to the tray.

Preferably, the press-mounting assembly further comprises a transition block fixed at the top of the pressing frame, a transition groove formed at a bottom portion of the transition block, a through hole coaxially penetrating through the transition block and communicating with the transition groove, a pressure sensor fixed at the top of the pressing frame and located within the transition groove, a connecting rod liftably penetrating through the through hole, and a contact block fixed at a bottom portion of the connecting rod and cooperating with the pressure sensor, wherein a diameter of the contact block is arranged to be greater than a diameter of the through hole.

The present invention also provides another technical solution: A stator assembly method, comprising the following steps: S1. placing stator discs in a stacked manner on support assemblies; S2. sucking, by a loading assembly each time, a single uppermost stator disc from the support assemblies, and performing an activation agent impregnation treatment on a bottom surface of the stator disc; S3. performing, by an adhesive applying structure, a top surface adhesive application treatment on the stator disc from S2; S4. performing, by an angle adjusting assembly, an angle adjustment on the stator disc from S3, wherein adjustment angles of the angle adjusting assembly are distributed in an arithmetic progression; S5. flipping, by a flipping assembly, the stator disc from S4, to make an adhesive-applied surface of the stator disc face downward and an activation agent-impregnated surface face upward; S6. sequentially placing the flipped stator disc from S5 on a bearing assembly; and S7. sequentially press-mounting, by a press-mounting assembly, the stator discs on the bearing assembly, thereby forming a stator.

Due to the application of the above technical solutions, the present invention has the following advantages compared with the prior art: The stator assembly production line of the present invention first subjects the bottom surface of the stator disc to an activation agent impregnation treatment via the loading structure, then performs a top surface adhesive application treatment on the stator disc via the adhesive applying structure. Subsequently, the stator disc is transferred to the adjusting structure, where each stator disc placed there is subjected to angle adjustment and flipping treatment by the adjusting structure, improving the structural stability of the subsequently formed stator. After the stator discs are adjusted by the adjusting structure, they are transferred to the press-mounting structure, where the stator discs are press-mounted sequentially by the press-mounting structure to ensure full contact between the activation agent layer and the adhesive layer of adjacent two layers of stator discs, thereby forming a finished stator. The entire process has a high degree of automation and does not require operator intervention throughout the operational workflow. This eliminates the influence of human factors, improves the transfer, bonding, and press-mounting efficiency of the stator discs, and avoids insufficient press-mounting or excessive press-mounting, thereby increasing the qualification rate of the finished stator.

### Brief Description of the Drawings

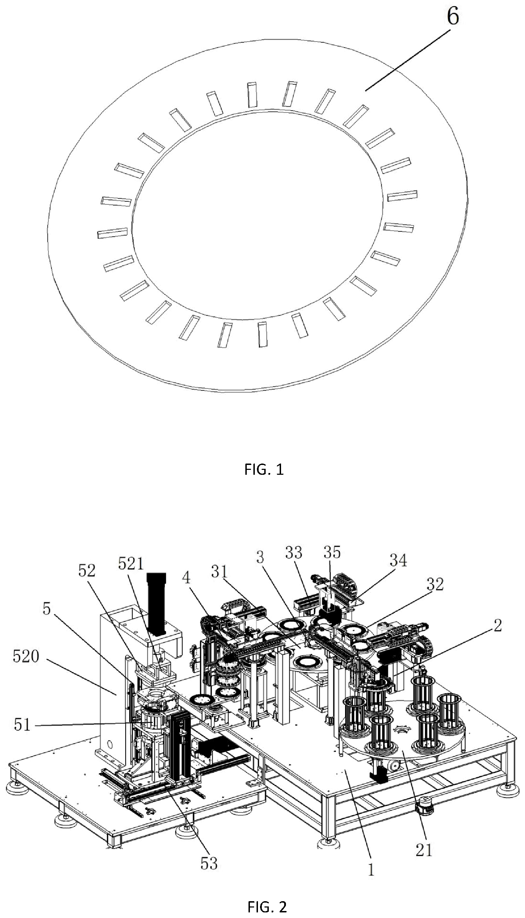

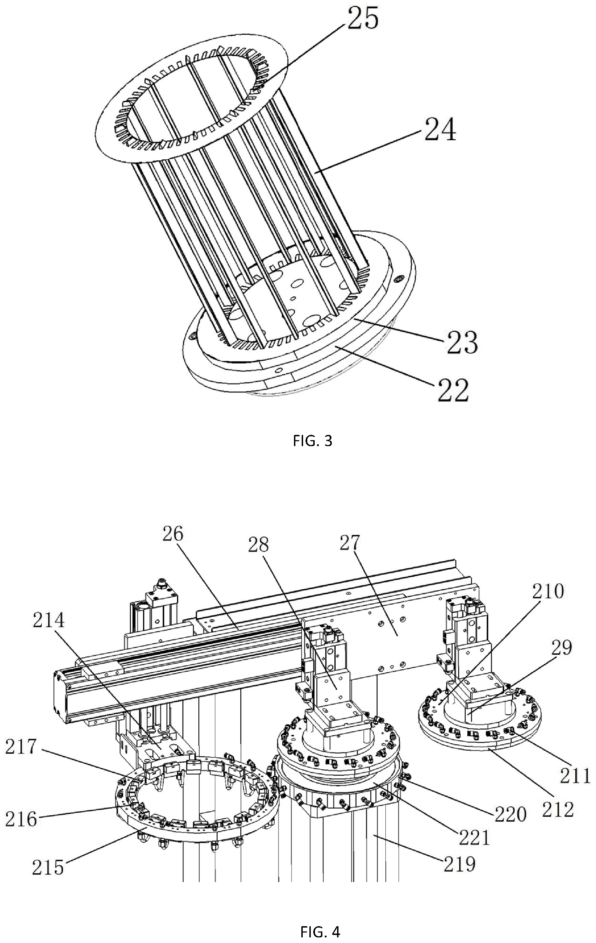

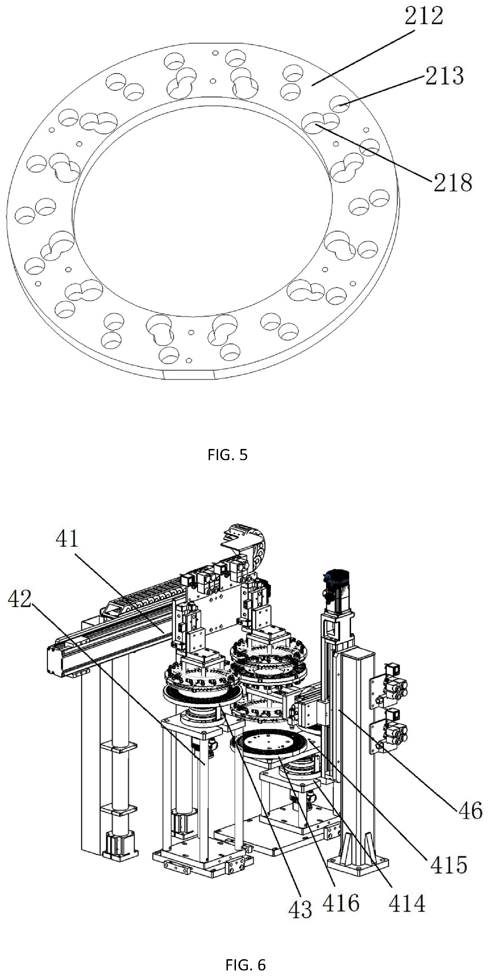

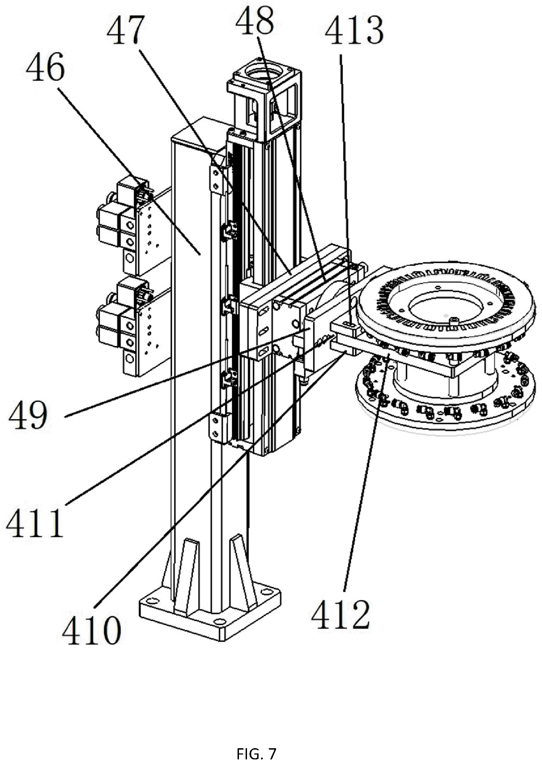

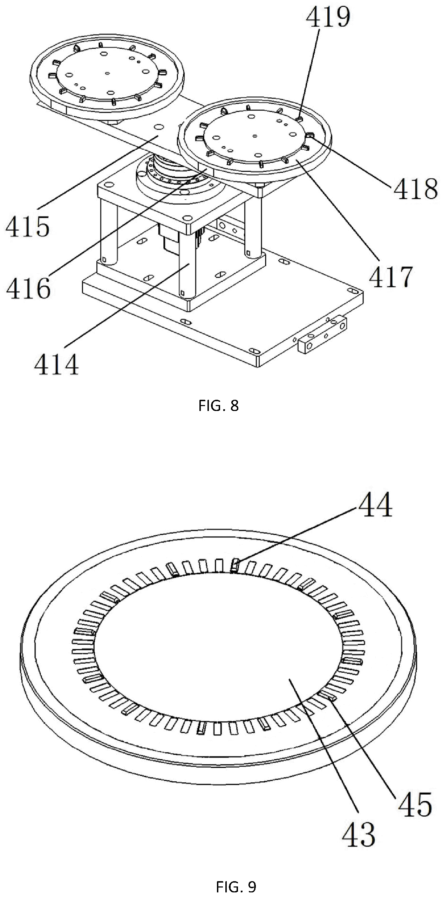

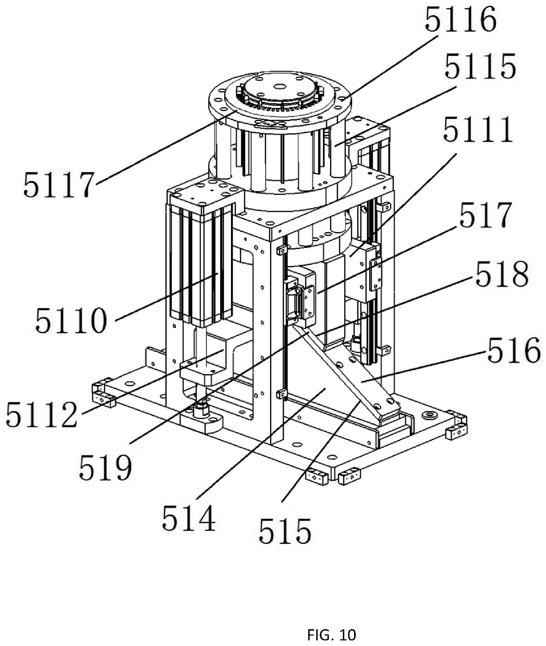

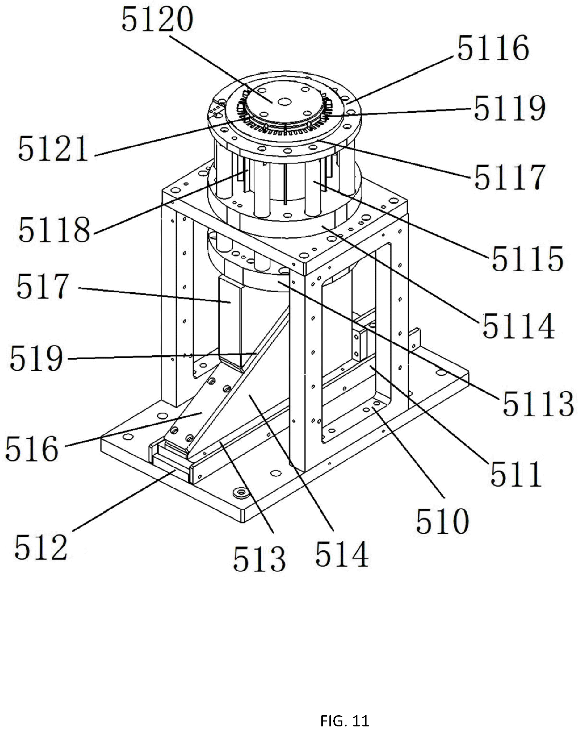

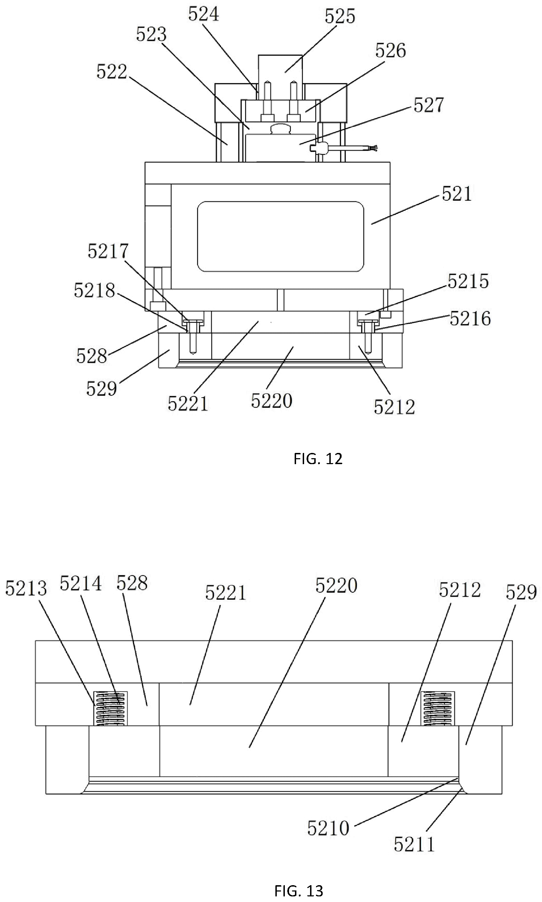

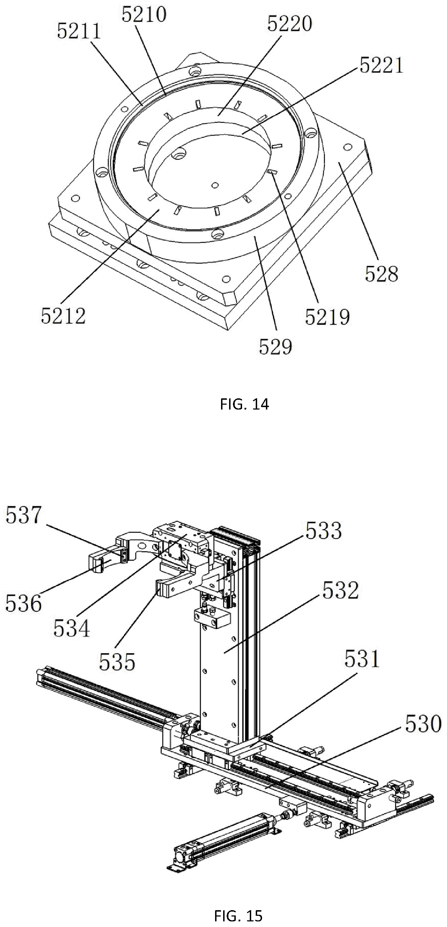

FIG. 1 is a schematic structural view of a stator disc of the present invention; FIG. 2 is a schematic structural view of the present invention; FIG. 3 is a partial schematic structural view of a loading structure of the present invention; FIG. 4 is a partial schematic structural view of the loading structure of the present invention; FIG. 5 is a schematic structural view of a leveling plate in the loading structure of the present invention; FIG. 6 is a schematic structural view of an adjusting structure of the present invention; FIG. 7 is a schematic structural view of a flipping assembly in the adjusting structure of the present invention; FIG. 8 is a schematic structural view of a transferring assembly in the adjusting structure of the present invention; FIG. 9 is a schematic structural view of a receiving disc in the adjusting structure of the present invention; FIG. 10 is a schematic structural view of a bearing assembly in a press-mounting structure of the present invention; FIG. 11 is a partial schematic structural view of the bearing assembly in the press-mounting structure of the present invention; FIG. 12 is a cross-sectional view of a press-mounting assembly in the press-mounting structure of the present invention; FIG. 13 is a partial cross-sectional view of the press-mounting assembly in the press-mounting structure of the present invention; FIG. 14 is a schematic structural view of a bottom portion of the press-mounting assembly in the press-mounting structure of the present invention; FIG. 15 is a schematic structural view of a transport assembly in the press-mounting structure of the present invention;

### Specific Embodiments

The present invention is further described below with reference to the embodiments shown in the accompanying drawings.

As shown in FIG. 1, which is a schematic structural diagram of a stator disc 6 of the present invention, the stator discs 6 are laminated and bonded together, thereby forming a stator structure. As shown in FIG. 2, this invention provides a schematic structural diagram for loading, transferring, and bonding the stator discs 6 shown in FIG. 1 to form a stator structure. This assembly production line includes a frame 1, a loading structure 2, an adhesive applying structure 3, an adjusting structure 4, and a press-mounting structure 5. The frame 1 is welded from aluminum profiles. The loading structure 2, the adhesive applying structure 3, the adjusting structure 4, and the press-mounting structure 5 are all fixed on the frame 1 and are sequentially arranged along the flow sequence of the stator discs 6. The production steps are as follows: An operator inserts the stator discs 6 into the loading structure 2. The loading structure 2 clamps the uppermost stator disc 6, subjects the bottom surface of that stator disc 6 to an activation agent impregnation treatment, and then transfers it to the adhesive applying structure 3. The adhesive applying structure 3 performs a top surface adhesive application treatment on the stator disc 6 whose bottom surface has been impregnated with the activation agent, and then transfers it to the adjusting structure 4. The adjusting structure 4 performs angle adjustment and flipping treatment on each stator disc 6 placed there. The angle adjustment treatment is performed to arrange each layer of stator disc 6 with an equal angular offset during the process of bonding to form the stator. In this way, the insertion positions of adjacent two layers of stator discs 6 are staggered relative to each other, causing them to interlock, thereby preventing the finished stator from falling apart at the insertion joints and improving the structural stability of the subsequently formed stator (primarily for segmented stator discs). The flipping treatment involves flipping the stator disc 6 180 degrees in the vertical direction, making the adhesive-applied surface of the stator disc 6 face downward and the activation agent-impregnated surface face upward, facilitating subsequent press-mounting. After the stator discs 6 are adjusted by the adjusting structure 4, they are transferred to the press-mounting structure 5, where the stator discs 6 are press-mounted sequentially by the press-mounting structure 5 to ensure full contact between the activation agent layer and the adhesive layer of adjacent two layers of stator discs 6, thereby forming a finished stator. Finally, they are transferred to subsequent processes.

The stator assembly production line shown in FIG. 2 can achieve compatibility with multiple models, forming the stator by adhesive dispensing and bonding outside the mold, which has a lower cost compared to in-mold forming. Simultaneously, the equipment has stronger universality. It can achieve the molding and bonding of whole-piece stators, and can also satisfy the molding and bonding of segmented stator pieces. As shown in FIG. 1, which illustrates the structure of a whole-piece stator, the stator disc 6 is annular. The inner side of the stator disc 6 is circumferentially provided with wire slots. The stator discs 6 are placed in a stacked manner, and adjacent two layers of stator discs 6 are bonded together to form the stator. The structure of a segmented stator is not annular but rather fan-shaped. Multiple fan-shaped segmented stator pieces are spliced together to form an annular stator disc 6. Then, the spliced annular stator disc 6 is bonded to form the stator. This way, during the earlier stamping process to form the segmented stator pieces, the utilization rate of the silicon steel sheets is higher, and the cost is lower. The processing of forming an annular stator disc by splicing fan-shaped segmented stator pieces is more stringent because the stator disc is not an integral whole at this point. During transfer and bonding, adjacent two fan-shaped segmented stator pieces are prone to height deviation, which directly affects the qualification rate of the finished stator. The stator assembly production line shown in FIG. 2 can be adapted for the transfer and bonding of fan-shaped segmented stator pieces, ultimately forming the stator, demonstrating stronger universality. FIGS. 3 and 4 illustrate schematic structural diagrams of the loading structure 2. An operator inserts the stator discs 6 into the loading structure 2. The loading structure 2 clamps the uppermost stator disc 6, subjects the bottom surface of that stator disc 6 to an activation agent impregnation treatment, and then transfers it to the adhesive applying structure 3. The loading structure 2 includes a loading turntable 21, support assemblies, a loading assembly, an activation agent impregnation assembly, etc. The loading turntable 21 is rotatably mounted on the frame 1 via a servo motor. The servo motor drives the loading turntable 21 to rotate, thereby facilitating the operator to insert the stator discs 6 onto the support assemblies (the stator disc here can be the annular whole-piece stator disc as shown in FIG. 1, or a stator disc formed by splicing fan-shaped segmented stator pieces).

The support assemblies are annularly arranged at the top of the loading turntable 21 and are used to receive the stator discs 6. The loading assembly is used to suction each layer of stator disc 6 from the support assemblies and transfer it to the activation agent impregnation assembly to complete the activation agent impregnation treatment on the bottom surface of the stator disc 6, facilitating subsequent bonding. The support assemblies include an outer fixed disc 22, an inner lifting disc 23, first insert rods 24, and first guiding portions 25. The outer fixed disc 22 is fixed at the top of the loading turntable 21. The first insert rods 24 are annularly arranged at the top of the outer fixed disc 22. The cross-sectional dimensions of the first insert rods 24 correspond to the dimensions of the wire slots on the inner sidewall of the stator disc 6. The first guiding portions 25 are obliquely arranged on tops of the first insert rods 24. The wire slots in the stator disc 6 are guided by the first guiding portions 25, facilitating the insertion of the stator disc 6. If it is a fan-shaped segmented stator piece, the inner sidewall of the segmented stator piece is also provided with wire slots. Through the cooperation of the wire slots with the first guiding portions 25 and the first insert rods 24, the segmented stator pieces are inserted onto the first insert rods. Multiple fan-shaped stator segments in the same plane are inserted onto the first insert rods 24, thereby forming one stator disc 6. The inner lifting disc 23 is arranged inside the outer fixed disc 22, and through slots corresponding to the first insert rods 24 are formed on the inner lifting disc 23. Firstly, this avoids the positions of the first insert rods 24; secondly, when the inner lifting disc 23 rises to lift the stator discs 6, the first insert rods 24 limit the inner lifting disc 23, improving the stability of the lifting motion of the inner lifting disc 23 and the accuracy of its lifting position, thereby increasing the accuracy of the transferring assembly suctioning the uppermost stator disc 6 from the inner lifting disc 23. The stator discs 6 are inserted on the first insert rods 24 and rest on the upper surface of the inner lifting disc 23. The inner lifting disc 23 is used to support and carry multiple layers of stator discs 6. The first insert rods 24 have two functions: one is to guide and limit the inserted stator discs 6; the other is to limit the lifting motion of the inner lifting disc 23 and the stator discs 6, preventing the inner lifting disc 23 and the stator discs 6 from shifting during lifting. The cylinder body of a lifting cylinder is fixed on the frame 1. A piston rod of the lifting cylinder is connected to a lifting block. The lifting cylinder drives the lifting block to ascend, and then the lifting block pushes the inner lifting disc 23 upward, lifting the stator discs 6 (the lifting cylinder and the lifting block are not shown in the figures). Each time the loading assembly suctions one uppermost stator disc 6 from the inner lifting disc 23, the lifting cylinder drives the inner lifting disc 23 to rise by a height equal to the thickness of one stator disc 6. When the stator discs 6 are inserted on the first insert rods 24, the shape of the stator discs 6 can be flexibly changed according to customer requirements. For example, six sets of outer fixed discs 22 are annularly arranged on the loading turntable 21. Each set of outer fixed discs 22 can be inserted with type A stator discs 6, or type A stator discs 6 can be inserted on one set of outer fixed discs 22 while type B stator discs 6 are inserted on another set of outer fixed discs 22, achieving diversity in stator assembly. The loading assembly is used to suction one uppermost stator disc 6 from the inner lifting disc 23 and transfer it to the activation agent impregnation assembly. The loading assembly includes a loading frame 26, a loading plate 27, a first lifting plate 28, support columns 29, an air plate 210, suction nozzles 211, a leveling plate 212, air holes 213, and avoidance holes 218. The loading frame 26 is fixed on the frame 1 by screws and is located on one side of the loading turntable 21. A linear slide is fixed on one side of the loading frame 26. The loading plate 27 is connected to the linear slide. The linear slide drives the loading plate 27 to move, thereby completing the transfer work of the stator disc 6. A lifting cylinder is fixed on a side of the loading plate 27 away from the loading frame 26. The first lifting plate 28 is connected to the lifting cylinder. The lifting cylinder drives the first lifting plate 28 to perform a lifting motion.

As shown in FIG. 4, the support columns 29 are fixed at the bottom of the first lifting plate 28, providing space for the subsequent installation of the suction nozzles 211. The air plate 210 is fixed at the bottom of the support columns 29. Multiple suction nozzles 211 are annularly arranged on the air plate 210 for suctioning one uppermost stator disc 6 from the inner lifting disc 23. The leveling plate 212 is fixed at the bottom of the air plate 210. As shown in FIG. 5, the air holes 213 are annularly arranged on the leveling plate 212 and penetrate through it. The suction nozzles 211 on the air plate 210 are installed through the air holes 213. The avoidance holes 218 penetrate through the leveling plate 212, avoiding the first insert rods 24 below when suctioning the stator disc 6 to prevent interference. By fixing the leveling plate 212 at the bottom of the air plate 210, when suctioning one uppermost stator disc 6 from the inner lifting disc 23, the leveling plate 212 descends and presses on that uppermost stator disc 6 on the inner lifting disc 23, and then the suction nozzles 211 on the air plate 210 suction that stator disc 6. The leveling plate 212 ensures the levelness of that stator disc 6. If suction is performed relying solely on the suction nozzles 211, due to the limited suction points during suction and transfer, height differences are prone to occur between adjacent two segmented stator pieces when facing fan-shaped segmented stator pieces. This would directly affect the subsequent assembly of the stator discs 6 (Therefore, the provision of the leveling plate 212 here allows for the transfer of the annular whole-piece stator disc as shown in FIG. 1, while also satisfying the transfer of fan-shaped segmented stator pieces).

As shown in FIG. 4, a lifting slide is fixed on a side of the loading frame 26 close to the loading turntable 21. A second lifting plate 214 is connected to the lifting slide. A separation disc 215 is fixed on a sliding portion of the lifting slide. The lifting slide drives the separation disc 215 to perform a lifting motion. Separation air blocks 216 are annularly arranged on an inner sidewall of the annular separation disc 215. A nozzle is connected to the separation air blocks 216 and is externally connected to an air pump. Air grooves 217 are formed on inner sides of the separation air blocks 216 and are horizontally arranged. The air grooves 217 are connected to the nozzle. When the suction nozzles 211 suction one uppermost stator disc 6 from the inner lifting disc 23, due to the contact between the first layer of stator disc 6 and the second layer of stator disc 6, the second layer of stator disc 6 might be lifted together. Therefore, by blowing air inward through the annularly arranged separation air blocks 216, the uppermost stator disc 6 and the second layer of stator disc 6 are separated. As shown in FIG. 4, an agent impregnation frame 219 is fixed on the frame 1 by screws. An agent impregnation disc 220 is fixed at the top of the agent impregnation frame 219. An agent impregnation tank is annular and is formed at the top of the agent impregnation disc 220. The agent impregnation tank is filled with an activation agent. An agent impregnation sponge 221 is placed in the agent impregnation tank, thereby adsorbing the activation agent in the agent impregnation tank itself. When the suction nozzles 211 suction one uppermost stator disc 6 from the inner lifting disc 23 and place it on the agent impregnation sponge 221, the lower surface of the stator disc 6 will adsorb the activation agent, facilitating subsequent adhesive bonding. The height of the agent impregnation sponge 221 is equal to the depth of the agent impregnation tank, ensuring the lower surface of the stator disc 6 can adsorb sufficient activation agent. By providing the agent impregnation sponge 221, it not only ensures more uniform application of the activation agent on the bottom of the stator disc 6, but also prevents the activation agent from flowing onto the upper surface of the stator disc 6, causing waste of the activation agent or contamination of the stator upper surface.

As shown in FIG. 2, the adhesive applying structure 3 is fixed on the frame 1 and is located on one side of the loading structure 2. The loading structure 2 suctions the stator disc 6 after its bottom surface has been impregnated and transfers it to the adhesive applying structure 3. The adhesive applying structure 3 applies adhesive to the upper surface of the stator disc 6. Finally, during the laminated assembly of the stator discs 6, the activation agent and the adhesive of adjacent two stator discs 6 contact each other, enhancing the bonding strength of the stator discs 6. The adhesive applying structure 3 includes an adhesive applying turntable 31, adhesive applying discs 32, and an adhesive applying assembly. The adhesive applying turntable 31 is rotatably mounted on the frame 1 via a servo motor. The servo motor drives the adhesive applying turntable 31 to rotate, thereby coordinating with the actions of the loading structure 2. The adhesive applying discs 32 are annularly arranged at the top of the adhesive applying turntable 31 and are used to receive the stator disc 6 transferred by the loading structure 2 after its bottom surface has been impregnated. The structure of the adhesive applying discs 32 is the same as that of the receiving disc 43 in the adjusting structure 4. Through the first positioning blocks 44 and the first positioning portions 45 annularly arranged on its top, the stator disc 6 placed thereon is positioned. Adhesive dispensing avoids positional deviation of the stator disc 6. The adhesive applying assembly is fixed at the top of the frame 1 and located outside the adhesive applying turntable 31. It performs top surface adhesive application on the stator disc 6 after its bottom surface has been impregnated. The adhesive applying assembly includes an X-axis linear module 33, a Y-axis linear module 34, and an adhesive dispensing head 35. The Y-axis linear module 34 is connected to the X-axis linear module 33. The adhesive dispensing head 35 is mounted on the Y-axis linear module 34. The X-axis linear module 33 and the Y-axis linear module 34 drive the adhesive dispensing head 35 to move over the adhesive applying discs 32, and then the adhesive dispensing head 35 dispenses adhesive onto the upper surface of the stator disc 6.

The adjusting structure 4 is fixed at the top of the frame 1 and located on one side of the adhesive applying structure 3. As shown in FIG. 6, the adjusting structure 4 includes a transport assembly 41, an angle adjusting assembly, a flipping assembly, and a transferring assembly. The transport assembly 41 is used to transport the stator disc 6 after top surface adhesive application to the angle adjusting assembly. The angle adjusting assembly performs angle adjustment on the stator disc 6. The purpose of the angle adjustment is to arrange each layer of stator disc 6 with an equal angular offset during the process of bonding to form the stator. In this way, the insertion positions of adjacent two layers of stator discs 6 are staggered relative to each other, causing them to interlock, thereby preventing the finished stator from falling apart at the insertion joints and improving the structural stability of the subsequently formed stator. Providing the angle adjusting assembly is mainly aimed at fan-shaped segmented stator pieces, as the stator disc at this point is not an integral annular piece but is formed by splicing fan-shaped segmented stator pieces into an annular shape. If angle adjustment is not performed on it, the splice lines of the stator after bonding completely overlap, causing the stator to fall apart at the insertion joints during use. The transport assembly 41 transfers the stator disc 6 after angle adjustment to the flipping assembly. The flipping assembly flips the stator disc 6 180 degrees in the vertical direction, making the adhesive-applied surface of the stator disc 6 face downward and the activation agent-impregnated surface face upward, facilitating subsequent press-mounting. The transferring assembly then transfers the flipped stator disc 6 out. The structure of the transport assembly 41 is the same as that of the loading assembly in the loading structure 2. By fixing the leveling plate 212 at the bottom of the air plate 210, when suctioning the stator disc 6 from the adhesive applying discs 32, the leveling plate 212 descends and presses on the stator disc 6 on the adhesive applying discs 32. Then, the suction nozzles 211 on the air plate 210 suction that stator disc 6. The leveling plate 212 ensures the levelness of that stator disc 6. Simultaneously, the avoidance holes 218 can avoid the adhesive dispensing positions on the surface of the stator disc 6, preventing the adhesive from being wiped off. If suction is performed relying solely on the suction nozzles 211, due to the limited suction points during suction and transfer, height differences are prone to occur between the stator discs 6, which would directly affect the subsequent assembly of the stator discs 6. The angle adjusting assembly performs angle adjustment on the stator disc 6. The purpose of the angle adjustment is to arrange each layer of stator disc 6 with an equal angular offset during the process of bonding to form the stator. In this way, the insertion positions of adjacent two layers of stator discs 6 are staggered relative to each other, causing them to interlock, thereby preventing the finished stator from falling apart at the insertion joints and improving the structural stability of the subsequently formed stator. The angle adjusting assembly comprises an adjustment frame 42, a receiving disc 43, first positioning blocks 44, and first positioning portions 45. The adjustment frame 42 is fixed on the machine base and is located on one side of the transport assembly 41. The receiving disc 43 is rotatably connected to the top of the adjustment frame 42 via a servo motor. The transport assembly 41 transports the stator disc 6 after top surface adhesive application onto the receiving disc 43.

As shown in FIG. 9, which is a schematic structural diagram of the receiving disc 43, the first positioning blocks 44 are annularly arranged at the top of the receiving disc 43. The transport assembly 41 transports the stator disc 6 after top surface adhesive application onto the receiving disc 43. Simultaneously, the wire slots on the inner side of the stator disc 6 are inserted onto the first positioning blocks 44. The stator disc 6 is positioned by the first positioning blocks 44, preventing the receiving disc 43 from causing excessive rotation of the stator disc 6 due to inertia during rotation, which would lead to misalignment of the wire slots on the stator disc 6. The first positioning portions 45 are obliquely formed on tops of the first positioning blocks 44. They guide the stator disc 6 during insertion, facilitating the insertion of the stator disc 6. By providing the rotatable receiving disc 43, each stator disc 6 placed thereon is rotated by an angle. This ensures the stator discs 6 interlock with each other after bonding, improves the structural robustness of the stator discs 6 after subsequent bonding, and prevents the stator discs 6 from being pried apart when subjected to force during use. The rotation angle is set to x (where x is the angle between two adjacent wire slots of the stator disc 6, such that rotating by this angle ensures the wire slots of each layer of stator disc 6 are aligned). The second layer of stator disc 6 is rotated by an angle of x. The third layer of stator disc 6 is rotated by an angle of 2x, and so on. The rotation angle for each layer of stator disc 6 is (n-1)x, where x is the angle between two adjacent wire slots of the stator disc 6, n is the layer number corresponding to the stator disc 6, and n is a positive integer. Each stator disc 6 placed here is rotated by an angle, ensuring the stator discs 6 interlock with each other after bonding, improving the structural robustness of the stator discs 6 after subsequent bonding, and preventing the stator discs 6 from being pried apart when subjected to force during use.

The flipping assembly is fixed on the machine base and is located on one side of the angle adjusting assembly. The transport assembly 41 suctions the stator disc 6 after angle adjustment and then places it at the flipping assembly. The flipping assembly flips the stator disc 6 180 degrees in the vertical direction, making the adhesive-applied surface of the stator disc 6 face downward and the activation agent-impregnated surface face upward, facilitating subsequent press-mounting and bonding. As shown in FIG. 7, the flipping assembly comprises a flipping frame 46, a third lifting plate 47, a flipping cylinder 48, a flipping plate 49, a first clamping plate 410, a clamping groove 411, an adjustment plate 412, and an adjustment groove 413. The flipping frame 46 is fixed on the machine base by screws. A lifting slide is vertically fixed on one side of the flipping frame 46. The third lifting plate 47 is connected to a sliding portion of the lifting slide. The lifting slide drives the third lifting plate 47 to perform a lifting motion. The flipping cylinder 48 is fixed on a side of the third lifting plate 47 away from the lifting slide. The flipping plate 49 is fixed on a rotating portion of the flipping cylinder 48. Through the cooperation of the lifting slide and the flipping cylinder 48, the flipping work of the stator disc 6 after adhesive application is completed. As shown in FIG. 7, there are two first clamping plates 410, which are fixed at intervals on a side of the flipping plate 49 away from the flipping cylinder 48. A clamping groove 411 is formed between the two first clamping plates 410 for installing an adjustment plate 412. The thickness of the adjustment plate 412 is equal to the height of the clamping groove 411. Therefore, after the adjustment plate 412 is inserted into the clamping groove 411 of the two first clamping plates 410, under the limiting effect of the upper and lower first clamping plates 410, the adjustment plate 412 will not shake in the vertical direction. The adjustment groove 413 has a rounded rectangular shape and penetrates through the first clamping plate 410. A fixing hole is formed on the adjustment plate 412. In actual fixing, fastening nuts will be used to complete the fixation of the adjustment plate 412. By providing the adjustment groove 413, the position of the adjustment plate 412 can be appropriately adjusted, thereby fine-tuning the adjustment plate 412 and improving the positional accuracy of stator disc 6 suction at this point. Suction mechanisms are fixed on both the top and bottom of the adjustment plate 412. They are used to receive the stator disc 6 after angle adjustment transferred here by the transport assembly 41, and to drive the stator disc 6 to flip 180 degrees in the vertical direction, making the adhesive-applied surface of the stator disc 6 face downward, facilitating subsequent press-mounting and bonding (the suction mechanism here is the same as the suction mechanism in the loading assembly, i.e., the suction mechanism consists of an air plate 210, suction nozzles 211, a leveling plate 212, air holes 213, avoidance holes 218, etc.).

The transferring assembly is fixed on the machine base and located below the flipping assembly. It transfers the stator disc 6 with its adhesive-applied surface facing downward to the outside. As shown in FIG. 8, the transferring assembly comprises a transferring frame 414, a transferring plate 415, transferring discs 416, placement slots 417, second positioning blocks 418, and second positioning portions 419. The transferring frame 414 is fixed on the machine base by screws. The transferring plate 415 is fixed at the top of the transferring frame 414 via a rotating motor. The rotating motor drives the transferring plate 415 to rotate, thereby transferring the stator disc 6 with its adhesive-applied surface facing downward to the outside. There are two transferring discs 416, which are fixed at the top of the transferring plate 415 at intervals. With the cooperation of the transferring plate 415, the transfer efficiency is improved. The placement slots 417 are annular and are formed on tops of the transferring discs 416. The flipping assembly places the flipped stator disc 6 on the transferring discs 416. An inner diameter of the placement slots 417 is arranged to be greater than an inner diameter of the stator disc 6, and an outer diameter of the placement slots 417 is arranged to be less than an outer diameter of the stator disc 6. While meeting the prerequisite of receiving the stator disc 6, contact with the lower surface of the stator disc 6 is avoided as much as possible. This is because the stator disc 6 at this point has been flipped by the flipping assembly, its adhesive-applied surface is already facing downward, and its central portion is in a suspended state, avoiding wiping off the adhesive on the lower surface of the stator disc 6 due to contact. The second positioning blocks 418 are annularly arranged on tops of the placement slots 417. The flipping assembly places the flipped stator disc 6 on the transferring discs. At this time, the wire slots on the inner side of the stator disc 6 are inserted into the second positioning blocks 418. The inserted stator disc 6 is positioned by the second positioning blocks 418, preventing the stator disc 6 from shifting during transfer. The second positioning portions 419 are obliquely formed on tops of the second positioning blocks 418. They guide the stator disc 6 during insertion, facilitating the insertion of the stator disc 6.

The transferring assembly rotates the stator discs 6 to the outside, where the transport assembly 41 transfers them to the press-mounting structure 5. The stator discs 6 are press-mounted sequentially by the press-mounting structure 5 to ensure full contact between the activation agent layer and the adhesive layer of adjacent two layers of stator discs 6, thereby forming a finished stator. The press-mounting structure 5 includes a bearing assembly 51, a press-mounting assembly 52, and a discharging assembly 53. The bearing assembly 51 is used to receive the stator disc 6 transferred here by the transport assembly 41. The stator discs 6 placed on the bearing assembly 51 are press-mounted sequentially by the press-mounting assembly 52. When the press-mounting thickness of the stator discs 6 reaches the design requirement, the discharging assembly 53 clamps the pressed and assembled finished stator and transfers it to a subsequent conveyor belt, conveying it to a subsequent assembly station. As shown in FIGS. 10 and 11, which are schematic structural diagrams of the bearing assembly 51, the bearing assembly 51 is used to receive the stator disc 6 transferred here by the transport assembly 41. The bearing assembly 51 includes a bearing frame 510, a first lifting assembly, a second lifting assembly, a top disc 5113, a fixed disc 5114, top columns 5115, a tray 5116, a boss 5117, second insert rods 5118, second guiding portions 5119, an inner gauge 5120, and a first guide surface 5121. The bearing frame 510 is welded from aluminum profiles. The bearing frame 510 is fixed on the assembly machine base by screws, primarily serving a supporting function.

The fixed disc 5114 is fixed at the top of the bearing frame 510 by screws. The inner gauge 5120 is fixed at the top of the fixed disc 5114 and is used to preliminarily position each stator disc 6 clamped and brought here, preventing deviation in the placement position of the stator disc 6, which would affect the subsequent press-mounting of the stator disc 6. It also prevents damage to the machine base caused by misplacing the stator disc 6 (the outer diameter of the inner gauge 5120 is equal to the inner diameter of the stator disc 6, so the function of the inner gauge 5120 is to position the inner sidewall of the stator disc 6). The first guide surface 5121 is obliquely formed at the top of the inner gauge 5120. It guides the inner sidewall of the stator disc 6 during placement, ensuring the stator disc 6 is more easily placed onto the inner gauge 5120. The second insert rods 5118 are fixed at the top of the fixed disc 5114 and are annularly arranged on an outer side of the inner gauge 5120. The second insert rods 5118 correspond to the shape of the wire slots of the stator disc 6. When inserting the stator disc 6, the inner sidewall of the stator disc 6 is inserted onto the inner gauge 5120, and the wire slots of the stator disc 6 are inserted onto the second insert rods 5118. The second guiding portions 5119 are obliquely formed on tops of the second insert rods 5118 to guide the wire slots of the stator disc 6, ensuring the stator disc 6 is more easily inserted onto the insert rods. The tray 5116 is sleeved on the inner gauge 5120, and a boss 5117 is integrally connected to the top of the tray 5116. The tray 5116 and the boss 5117 are circumferentially provided with grooves corresponding to the second insert rods 5118, thereby avoiding the positions of the second insert rods 5118. The tray 5116 is not fixedly connected to the inner gauge 5120 inside it. Under the drive of the first lifting assembly and the second lifting assembly at the bottom, the tray 5116 can perform a lifting motion along the inner gauge 5120. Each time one stator disc 6 is placed on the boss 5117, the first lifting assembly drives the tray 5116 to descend by a distance equal to the thickness of one stator disc 6, ensuring that the press-mounting assembly 52 presses down the same distance each time, thereby ensuring the consistency of the pressing and bonding effect of each layer of stator disc 6 and avoiding insufficient press-mounting or excessive press-mounting. The top columns 5115 are fixed at the bottom of the tray 5116 and penetrate through the fixed disc 5114 and the bearing frame 510. The top disc 5113 is fixed at the bottoms of the top columns 5115. The first lifting assembly and the second lifting assembly are connected to the top disc 5113 and are used to drive the top disc 5113 to perform a lifting motion, thereby driving the tray 5116 above to perform a lifting motion.

The first lifting assembly includes guide plates 511, first wear-resistant plates 512, second wear-resistant plates 513, a main sliding plate 514, a first wedge surface 515, third wear-resistant plates 516, an auxiliary sliding plate 517, a second wedge surface 518, and fourth wear-resistant plates 519. Each time the transport assembly 41 places one stator disc 6 on the boss 5117, the first lifting assembly drives the tray 5116 to descend by a distance equal to the thickness of one stator disc 6, ensuring that the press-mounting structure 5 descends and presses the same distance each time, thereby ensuring the consistency of the pressing and bonding effect of each layer of stator disc 6 and avoiding insufficient press-mounting or excessive press-mounting. There are two guide plates 511, fixed on the bearing frame 510 at intervals. A guide groove is formed between the two spaced guide plates 511 to provide linear guidance for the sliding of the main sliding plate 514, preventing the main sliding plate 514 from deviating during sliding, which would affect the lifting motion of the auxiliary sliding plate 517. A first wear-resistant plate 512 is fixed on the bearing frame 510 and located within the guide groove formed by the two guide plates 511. A second wear-resistant plate 513 is fixed at the bottom of the main sliding plate 514 and rests on the first wear-resistant plate 512. When a pushing cylinder pushes the main sliding plate 514 to move, the main sliding plate 514 drives the second wear-resistant plate 513 at its bottom to move synchronously. The second wear-resistant plate 513 is arranged within the guide groove formed by the two guide plates 511, and the width of the second wear-resistant plate 513 is equal to the distance between the two guide plates 511. The guide plates 511 guide the second wear-resistant plate 513, thereby providing linear guidance for the sliding of the main sliding plate 514, preventing the main sliding plate 514 from deviating during sliding, which would affect the lifting motion of the auxiliary sliding plate 517. By providing the cooperatively matched first wear-resistant plate 512 and second wear-resistant plate 513, wear on the main sliding plate 514 due to frequent friction can be avoided, preventing any impact on the accuracy of the lifting distance of the auxiliary sliding plate 517. The main sliding plate 514 has a right-angled triangular shape. The second wear-resistant plate 513 is fixed on one right-angled side of the main sliding plate 514. The inclined surface of the main sliding plate 514 is the first wedge surface 515.

The auxiliary sliding plate 517 is fixed at the bottom of the top disc 5113. The auxiliary sliding plate 517 has a right-angled triangular shape. One right-angled side of the auxiliary sliding plate 517 is fixed at the bottom of the top disc 5113. The inclined surface of the auxiliary sliding plate 517 is a second wedge surface 518, and the second wedge surface 518 cooperates with the first wedge surface 515. Therefore, when a pushing cylinder pushes the main sliding plate 514 to move, the main sliding plate 514 pushes the auxiliary sliding plate 517 to perform a lifting motion, thereby driving the top disc 5113 and the tray 5116 above to perform a lifting motion. To prevent wear at the contact area between the main sliding plate 514 and the auxiliary sliding plate 517, a third wear-resistant plate 516 is fixed on the first wedge surface 515 of the main sliding plate 514, and a fourth wear-resistant plate 519 is fixed on the second wedge surface 518 of the auxiliary sliding plate 517. By providing the cooperatively matched main sliding plate 514 and auxiliary sliding plate 517, the linear motion of the pushing cylinder is converted into a lifting motion, thereby avoiding interference with the press-mounting action of the press-mounting assembly 52. If a lifting cylinder were directly connected to the top disc 5113 to drive the top disc 5113 to perform a lifting motion, then when the press-mounting assembly 52 presses down on the stator disc 6, the vertically downward pressure would directly act on the lifting cylinder. Frequent pressurization would damage the lifting cylinder, causing its accuracy to decrease. It would also prevent the pressing distance from remaining consistent, which would affect the qualification rate of the finished stator. By providing the cooperatively matched main sliding plate 514 and auxiliary sliding plate 517, the linear motion of the pushing cylinder is converted into a lifting motion, thereby avoiding interference with the press-mounting action of the press-mounting assembly 52. The vertical pressure from the press-mounting assembly 52 acts downward on the main sliding plate 514 and the auxiliary sliding plate 517, having a smaller impact on the pushing cylinder on one side. Furthermore, the main sliding plate 514 is in contact with the bearing frame 510. During press-mounting, the bottom of the stator disc 6 is rigidly supported, rather than being elastically supported by a lifting cylinder. Rigid support provides a better pressing effect, ensuring that the press-mounting assembly 52 presses the same distance each time it descends, thus ensuring the consistency of the pressing and bonding effect of each layer of stator disc 6 and avoiding insufficient press-mounting or excessive press-mounting.

The second lifting mechanism includes a lifting cylinder 5110, a lifting plate 5111, and a connecting plate 5112. The lifting plate 5111 is slidingly connected to the inner side of the bearing frame 510 via a slide rail and a slide block, and abuts against the lower surface of the top disc 5113 (the lifting plate 5111 merely abuts against the top disc 5113 and is not fixedly connected to it). The lifting cylinder 5110 is fixed on the outer side of the bearing frame 510. One side of the connecting plate 5112 is fixed to the bottom of the lifting plate 5111, and the other side of the connecting plate 5112 is connected to a piston rod of the lifting cylinder 5110. The lifting cylinder 5110 drives the connecting plate 5112 and the lifting plate 5111 to perform a lifting motion, thereby driving the top disc 5113 to perform a lifting motion. When the press-mounting thickness of the stator discs 6 reaches the design requirement, the second lifting assembly assists the first lifting assembly to jointly lift the stator. The discharging assembly 53 clamps the pressed and assembled finished stator and transfers it to a subsequent conveyor belt, conveying it to a subsequent assembly station (because a stator is typically formed by laminating and bonding hundreds of stator discs 6, its weight is considerable. At this point, the pushing cylinder is arranged horizontally. If relying solely on the pushing cylinder to lift the stator, it would be quite difficult. Moreover, to ensure the accuracy of the pushing cylinder, the ejection speed should not be too high. Therefore, the second lifting assembly assists the first lifting assembly to jointly lift the stator). After the stator is ejected, the second lifting assembly returns to its original position. At this time, the top disc 5113 remains under the control of the first lifting assembly, preventing the pressing action of the press-mounting assembly 52 from affecting the second lifting assembly. The press-mounting assembly 52 is arranged above the bearing assembly 51 and is used to sequentially press and assemble the stator discs 6 placed on the bearing assembly 51. As shown in FIGS. 12-14, the press-mounting assembly 52 includes a press-mounting frame 520, a pressing frame 521, a transition block 522, a transition groove 523, a through hole 524, a connecting rod 525, a contact block 526, a pressure sensor 527, a pressing plate 528, an outer gauge 529, a groove 5210, a second guide surface 5211, a pressing block 5212, a spring groove 5213, a spring 5214, a card slot 5215, a through slot 5216, a card plate 5217, a fixed column 5218, insertion slots 5219, a first avoidance slot 5220, and a second avoidance slot 5221. The press-mounting frame 520 is fixed on the assembly machine base by screws and is located above the bearing assembly 51. The pressing frame 521 is slidingly connected to one side of the press-mounting frame 520 via a slide rail and a slide block. A pressing cylinder (the pressing cylinder is a conventional single-acting cylinder) is fixed at the top of the press-mounting frame 520. The pressing cylinder drives the pressing frame 521 to descend, thereby sequentially press-mounting the stator discs 6 placed on the bearing assembly 51. As shown in FIG. 12, a transition block 522 is fixed at the top of the pressing frame 521. A transition groove 523 is formed at a bottom of the transition block 522 and is configured to accommodate a pressure sensor 527 located at the top of the pressing frame 521. A through hole 524 penetrates through the transition block 522 and communicates with the transition groove 523. The through hole 524 is coaxially arranged with the transition block 522. A connecting rod 525 is connected to a piston rod of the pressing cylinder and passes through the through hole 524. A contact block 526 is fixed at a bottom of the connecting rod 525 and is disposed within the transition groove 523. The contact block 526 cooperates with the pressure sensor 527 located below, ensuring that the pressure is the same each time it is pressed down, thus ensuring the consistency of the pressing and bonding effect of each layer of stator disc 6 and avoiding insufficient press-mounting or excessive press-mounting. A diameter of the contact block 526 is arranged to be greater than a diameter of the through hole 524. Therefore, the contact block 526 is caught at a bottom of the through hole 524, preventing the pressing frame 521 from falling. Simultaneously, by relying on the cooperation between the contact block 526 and the pressure sensor 527, the same pressing force for each pressing is also ensured, avoiding excessive press-mounting or insufficient press-mounting.

As shown in FIGS. 12-14, a pressing plate 528 is fixed at a bottom of the pressing frame 521 and moves up and down synchronously with the pressing frame 521. An outer gauge 529 is fixed at a bottom of the pressing plate 528. A groove 5210 is formed on an inner side of the outer gauge 529 and is coaxially arranged with the outer gauge 529. An inner diameter of the outer gauge 529 is arranged to be equal to an outer diameter of the stator disc 6, providing re-positioning for each stator disc 6 during press-mounting. This prevents deviation in the placement position of the stator disc 6, which would affect the subsequent press-mounting of the stator disc 6. It also prevents damage to the machine base caused by a misaligned stator disc 6 (the inner diameter of the outer gauge 529 is arranged to be equal to the outer diameter of the stator disc 6, so the function of the outer gauge 529 is to position the outer sidewall of the stator disc 6). A second guide surface 5211 is obliquely formed on an inner side of a bottom portion of the outer gauge 529. When pressing the stator disc 6 downward, it guides the outer sidewall of the stator disc 6, ensuring the stator disc 6 enters the outer gauge 529 more easily. A pressing block 5212 is elastically arranged at the bottom of the pressing plate 528, and an outer sidewall of the pressing block 5212 abuts against an inner sidewall of the outer gauge 529. When the pressing block 5212 elastically presses the stator disc 6 downward, the motion of the pressing block 5212 is guided by the outer gauge 529, improving the press-mounting effect of the stator disc 6. As shown in FIGS. 12 and 13, a thickness of the pressing block 5212 is arranged to be less than a thickness of the outer gauge 529, ensuring the outer gauge 529 simultaneously satisfies the elastic guidance of the pressing block 5212 and the outer sidewall positioning of the stator disc 6. Insertion slots 5219 are annularly arranged at a bottom of the pressing block 5212 and correspond one-to-one with the positions of the second insert rods 5118 of the bearing assembly 51. When the pressing block 5212 moves downward to press and assemble the stator disc 6, the second insert rods 5118 are inserted into the insertion slots 5219. Relying on the cooperation between the second insert rods 5118 and the insertion slots 5219, not only is the motion of the pressing block 5212 guided, but the press-mounting effect of the stator disc 6 is also improved. As shown in FIG. 12, a card slot 5215 is formed on a top of the pressing plate 528. A through slot 5216 is formed at a bottom of the card slot 5215 and penetrates through the pressing plate 528. A diameter of the card slot 5215 is arranged to be greater than a diameter of the through slot 5216. Therefore, a shoulder structure is formed at the connection between the card slot 5215 and the through slot 5216, which is used to retain a card plate 5217. A fixed column 5218 is fixed on a top of the pressing block 5212 and passes through the through slot 5216. The card plate 5217 is fixed on a top of the fixed column 5218 and is disposed within the card slot 5215. A diameter of the card plate 5217 is arranged to be greater than a diameter of the fixed column 5218. Therefore, when not press-mounting, the card plate 5217 abuts against a lower surface of the card slot 5215. At this time, a gap exists between the pressing block 5212 and the pressing plate 528. Since the card plate 5217 is caught at the shoulder between the card slot 5215 and the through slot 5216, the pressing block 5212 does not fall off. During press-mounting, the pressing plate 528 moves downward and presses against the uppermost stator disc 6. At this time, the pressing block 5212 rises until it contacts the pressing plate 528. A spring groove 5213 is formed at a bottom of the pressing plate 528. A spring 5214 is disposed within the spring groove 5213 and abuts against an upper surface of the pressing block 5212. Therefore, when not press-mounting, the card plate 5217 abuts against the lower surface of the card slot 5215. At this time, a gap exists between the pressing block 5212 and the pressing plate 528. Since the card plate 5217 is caught at the shoulder between the card slot 5215 and the through slot 5216, the pressing block 5212 does not fall off, and the spring 5214 is in an extended state. During press-mounting, the pressing plate 528 moves downward and presses against the uppermost stator disc 6. At this time, the pressing block 5212 rises until it contacts the pressing plate 528, and the spring 5214 is in a compressed state. The spring 5214 enables elastic press-mounting of the pressing block 5212, avoiding damage to the stator disc 6 from rigid press-mounting (the press-mounting of the stator disc 6 features rigid support at the bottom and elastic pressing at the top). The spring 5214 here not only serves the function of elastic press-mounting, avoiding damage to the stator disc 6 from rigid pressing, but also, more importantly, serves a discharging function. This is because during press-mounting, the pressing block 5212 will press and contact the uppermost stator disc 6. When the pressing block 5212 resets after pressing, it is prone to lift the uppermost stator disc 6 again. Therefore, the resetting motion of the spring 5214 drives the pressing block 5212 to reset, assisting in the discharge of the uppermost stator disc 6. A first avoidance slot 5220 penetrates through the pressing block 5212. A second avoidance slot 5221 penetrates through the pressing plate 528 and cooperates coaxially with the first avoidance slot 5220. When press-mounting the stator disc 6, it avoids the position of the inner gauge 5120, preventing interference from occurring. When the press-mounting thickness of the stator discs 6 reaches the design requirement, the discharging assembly 53 clamps the pressed and assembled finished stator and transfers it to a subsequent conveyor belt, conveying it to a subsequent assembly station. As shown in FIG. 15, the discharging assembly 53 includes a first moving plate 530, a second moving plate 531, a handling frame 532, a corner plate 533, and a clamping mechanism. The first moving plate 530 is slidingly connected to a top of the assembly machine base via a slide rail and a slide block. The second moving plate 531 is slidingly connected to a top of the first moving plate 530 via a slide rail and a slide block (both the first moving plate 530 and the second moving plate 531 are driven by linear cylinders, and the moving directions of the first moving plate 530 and the second moving plate 531 are perpendicular to each other). The handling frame 532 is fixed at the top of the second moving plate 531. The corner plate 533 is slidingly connected to a side of the handling frame 532 close to the bearing frame 510. The clamping mechanism is fixed on the corner plate 533 and is used to clamp the pressed and assembled finished stator, transferring it to a subsequent conveyor belt and conveying it to a subsequent assembly station. As shown in FIG. 15, the clamping mechanism includes a finger cylinder 534, second clamping plates 535, avoidance arcs 536, and clamping blocks 537. The finger cylinder 534 is fixed on the corner plate 533. There are two second clamping plates 535, which are respectively fixed on the finger cylinder 534. The finger cylinder 534 drives the second clamping plates 535 to move inward, thereby completing the clamping of the finished stator. The clamping blocks 537 are fixed on inner sides of the second clamping plates 535. When the second clamping plates 535 move inward, the clamping blocks 537 clamp the finished stator on the tray 5116. The clamping blocks 537 are made of rubber, which can avoid scratching the sidewall of the stator during clamping. Avoidance arcs 536 are formed on inner sides of the clamping blocks 537. Since the finished stator is formed by laminating and bonding multiple stator discs 6, presenting a cylindrical shape, the avoidance arcs 536 avoid the structure in the diameter direction of the finished stator, facilitating the clamping by the clamping blocks 537.

The working steps of the stator assembly production line of the present invention are as follows: An operator inserts the stator discs 6 into the loading structure 2. The loading structure 2 clamps the uppermost stator disc 6, subjects the bottom surface of that stator disc 6 to an activation agent impregnation treatment, and then transfers it to the adhesive applying structure 3. The adhesive applying structure 3 performs a top surface adhesive application treatment on the stator disc 6 whose bottom surface has been impregnated with the activation agent, and then transfers it to the adjusting structure 4. The adjusting structure 4 performs angle adjustment and flipping treatment on each stator disc 6 placed there. The angle adjustment treatment is performed to arrange each layer of stator disc 6 with an equal angular offset during the process of bonding to form the stator. In this way, the insertion positions of adjacent two layers of stator discs 6 are staggered relative to each other, causing them to interlock, thereby preventing the finished stator from falling apart at the insertion joints and improving the structural stability of the subsequently formed stator. The flipping treatment involves flipping the stator disc 6 180 degrees in the vertical direction, making the adhesive-applied surface of the stator disc 6 face downward and the activation agent-impregnated surface face upward, facilitating subsequent press-mounting. After the stator discs 6 are adjusted by the adjusting structure 4, they are transferred to the press-mounting structure 5, where the stator discs 6 are press-mounted sequentially by the press-mounting structure 5 to ensure full contact between the activation agent layer and the adhesive layer of adjacent two layers of stator discs 6, thereby forming a finished stator. Finally, they are transferred to subsequent processes.

The above embodiments are only intended to illustrate the technical concept and features of the present invention, aiming to enable those skilled in the art to understand the content of the present invention and carry it out accordingly. They shall not be construed as limiting the protection scope of the present invention. Any equivalent variations or modifications made according to the essential spirit of the present invention shall fall within the protection scope of the present invention.

## Claims

1. A stator assembly production line, the stator being formed by laminating and bonding stator discs, the production line comprising:
a frame;
a loading structure, wherein the loading structure comprises a loading turntable rotatably arranged at the top of the frame, support assemblies annularly arranged at the top of the loading turntable, an agent impregnation disc fixed at the top of the frame and located on one side of the loading turntable, and a loading assembly arranged at the tops of the support assemblies and the top of the agent impregnation disc, wherein the stator discs are stacked and placed on the support assemblies, the loading assembly sucks a single uppermost stator disc from the support assemblies and places it inside the agent impregnation disc;
an adhesive applying structure, wherein the adhesive applying structure comprises an adhesive applying turntable rotatably arranged at the top of the frame, adhesive applying discs annularly arranged at the top of the adhesive applying turntable, and an adhesive applying assembly arranged on an outer side of the adhesive applying turntable, wherein the loading assembly sucks the stator discs from the agent impregnation disc and places same on the adhesive applying discs, and the adhesive applying assembly applies an adhesive to the upper surfaces of the stator discs;
an adjusting structure, the adjusting structure comprising an angle adjusting assembly and a flipping assembly fixed at the top of the frame, a transport assembly mounted above the adhesive applying discs and the angle adjusting assembly, and a transferring assembly arranged below the flipping assembly, wherein the transport assembly sucks the stator discs from the adhesive applying discs and places same on the angle adjusting assembly or sucks the stator discs from the angle adjusting assembly and places same on the flipping assembly, adjustment angles of the angle adjusting assembly are distributed in an arithmetic progression; the flipping assembly flips the stator disc to make its adhesive-applied surface face downward and its agent-impregnated surface face upward, and places it on the transferring assembly;
a press-mounting structure, the press-mounting structure comprising a bearing assembly and a press-mounting assembly;
the bearing assembly comprising a bearing frame, an inner gauge fixed at the top of the bearing frame, a tray liftably sleeved on the inner gauge, and second insert rods annularly arranged at the top of the bearing frame and penetrating through the tray, wherein the transport assembly sucks the stator discs from the transferring assembly and places same on the tray, and the inner gauge is configured to limit an inner sidewall of the stator disc;
the press-mounting assembly comprising a press-mounting frame mounted above the bearing frame, a pressing frame liftably arranged at a bottom portion of the press-mounting frame, a pressing plate fixed at a bottom portion of the pressing frame, an outer gauge fixed at a bottom portion of the pressing plate, a pressing block elastically arranged at the bottom portion of the pressing plate and abutting against an inner sidewall of the outer gauge, and insertion slots annularly arranged at a bottom portion of the pressing block;
wherein when the pressing frame descends, the pressing block presses against an upper surface of the stator disc on the tray, the insertion slots are configured to limit the second insert rods, and the outer gauge is configured to limit an outer sidewall of the stator disc.

2. The stator assembly production line according to claim 1, wherein the support assemblies comprise an outer fixed disc fixed at the top of the loading turntable, first insert rods annularly arranged at the top of the outer fixed disc, first guiding portions obliquely arranged on tops of the first insert rods, and an inner lifting disc liftably sleeved on the first insert rods, wherein the stator discs are inserted on the first insert rods.

3. The stator assembly production line according to claim 2, wherein the loading assembly comprises a loading frame, a loading plate movably arranged on one side of the loading frame, a first lifting plate liftably arranged on one side of the loading plate, an air plate fixed at a bottom portion of the first lifting plate, a leveling plate fixed at a bottom portion of the air plate, suction nozzles annularly arranged at the top of the air plate, and air holes and avoidance holes penetrating through the leveling plate, wherein the suction nozzles are installed through the air holes and are configured to suck a single uppermost stator disc from the inner lifting disc.

4. The stator assembly production line according to claim 3, wherein the loading structure further comprises a second lifting plate liftably arranged at a bottom portion of the loading frame, a separation disc fixed at a bottom portion of the second lifting plate, separation air blocks annularly arranged on an inner sidewall of the separation disc, and air grooves formed on inner sides of the separation air blocks, wherein the separation air blocks are configured to separate a first layer of stator disc and a second layer of stator disc at the top of the inner lifting disc.

5. The stator assembly production line according to claim 1, wherein the angle adjusting assembly comprises an adjustment frame fixed at the top of the frame, a receiving disc rotatably mounted at the top of the adjustment frame, first positioning blocks annularly arranged at the top of the receiving disc, and first positioning portions obliquely formed on tops of the first positioning blocks, wherein the transport assembly sucks the stator discs from the adhesive applying discs and places same on the receiving disc.

6. The stator assembly production line according to claim 5, wherein the flipping assembly comprises a flipping frame fixed at the top of the frame, a third lifting plate liftably arranged on one side of the flipping frame, a flipping plate rotatably mounted on a side of the third lifting plate away from the flipping frame, an adjustment plate adjustably arranged on one side of the flipping plate, and suction mechanisms fixed on both sides of the adjustment plate, wherein the transport assembly sucks the stator discs from the receiving disc and places same on the suction mechanisms, and the flipping assembly flips the stator disc to make its adhesive-applied surface face downward and its agent-impregnated surface face upward.

7. The stator assembly production line according to claim 1, wherein the transferring assembly comprises a transferring frame fixed at the top of the frame, a transferring plate rotatably mounted at the top of the transferring frame, transferring discs fixed at the top of the transferring plate at intervals, and placement slots formed on tops of the transferring discs, wherein an inner diameter of the placement slots is arranged to be greater than an inner diameter of the stator disc, an outer diameter of the placement slots is arranged to be less than an outer diameter of the stator disc, and the flipping assembly places the flipped stator disc on the transferring discs.

8. A stator assembly method, adopting the stator assembly production line according to any one of claims 1-9, comprising following steps: S1. placing stator discs in a stacked manner on support assemblies; S2. sucking, by a loading assembly each time, a single uppermost stator disc from the support assemblies, and performing an activation agent impregnation treatment on a bottom surface of the stator disc; S3. performing, by an adhesive applying structure, a top surface adhesive application treatment on the stator disc from S2; S4. performing, by an angle adjusting assembly, an angle adjustment on the stator disc from S3, wherein adjustment angles of the angle adjusting assembly are distributed in an arithmetic progression; S5. flipping, by a flipping assembly, the stator disc from S4, to make an adhesive-applied surface of the stator disc face downward and an activation agent-impregnated surface face upward; S6. sequentially placing the flipped stator disc from S5 on a bearing assembly; and S7. sequentially press-mounting, by a press-mounting assembly, the stator discs on the bearing assembly, thereby forming a stator.
